# EUROPEAN PATENT APPLICATION

(11) **EP 0 739 868 A1**
(43) Date of publication of application: **30.10.1996**
(21) Application number: 96302738.8
(22) Date of filing: 19.04.1996
(51) Int. Cl.: C04B 35/634

(54) **Method for forming extruded parts from inorganic material**

(30) Priority: 24.04.1995 US 427064
(71) Applicant: ROHM AND HAAS COMPANY, Philadelphia, Pennsylvania 19106-2399 (US)
(72) Inventor: Wu, Xianliang, Dresher, Pennsylvania 19025 (US)
(74) Representative: Tanner, James Percival

(57) **Abstract**

A method for producing extruded parts from inorganic materials is provided. The method uses selected polymeric binders which are free of vinyl acetate and which comprise as ploymer units at least 1% of monoethylenically unsaturated acids and up-to 99% of acid-free monomers. The use of the polymeric binders of the present invention in extrusion processes provides processability of a material during extrusion and strength of ceramic parts prior to and after sintering. Extruded parts formed using the binder of the present invention may be dried at room temperature or at elevated temperatures, and may be heated in an inert atmosphere. The binder of the present invention may be used with oxide, nitride, boride and carbide ceramics, and with metals and combinations of minerals such as clay and zeolites.

## Description

The present invention relates to a method for forming extruded parts from an inorganic material. More particularly, the present invention relates to a method for forming extruded parts from an inorganic material by using as a binder for the inorganic material one or more polymers consisting of, as polymerized units, at least 1 percent of one or more monoethylenically unsaturated acids.

As used herein, the term "inorganic" refers to ceramics and to metals, induding alkaline metals and alkaline earth metals. Binders are useful in ceramics and metal extrusion processing to add plasticity, which aids processability and improves handling.

Extrusion is commonly used to form complex parts from ceramic or metal materials. Extrusion is particularly valuable when precision or reproducibility is essential for a ceramic or metal part. In a typical process, a powder of the ceramic or metal is blended with water, a lubricant, a binder and optional other additives by mechanical mixing. The mixing forms a paste. The paste may then be fed into a vertical or horizontal extruder. Extrusion is usually done at room temperature or above, typically at about 15° to 40°C. Following cutting of the extrudate to form parts, the parts are typically dried at room temperature or at an elevated temperature.

Finally, ceramic parts are usually sintered and this requires an even higher temperature. Sintering is the heating of a ceramic part to effect the bonding together of ceramic particles to form a densified ceramic part. For example, alumina is sintered at 1400°C or above. A ceramic part before sintering is called a "green" part, and the strength of a green part is known as the "green strength". Removal of binders and other materials during heating of ceramic parts is known as "burnout".

Rheological properties of the paste are crucial for extrusion of ceramic and metal parts. The paste must be able to be readily fed into the extruder and must flow readily under pressure. Additives such as water and other liquids may be used to aid in the feeding of the paste.

Strength of the extruded parts prior to sintering, known as green strength, is essential for dimensional stability and for stability of the parts during handling.

Another requirement is strength of extruded parts at elevated temperatures. Because parts are dried and sintered at elevated temperatures, the parts must be able to withstand these temperatures without cracking and shrinking.

For extrusion of ceramics, cellulosic polymers such as methyl cellulose and hydroxyethyl cellulose are commonly used. Cellulosic polymer binders provide adequate rheological properties and are able to be satisfactorily removed during sintering. While cellulosic polymers are known to gel at temperatures above room temperature, which provides for added strength of the parts during drying, the strength is still not sufficient to avoid slumping or sagging of the parts. The temperature may increase, for example, during mixing. Furthermore, during drying of ceramic parts containing cellulosic polymer binders, cracking often occurs. Another drawback of cellulosic binders is that they may produce an undesirably high char yield when heated in an inert atmosphere. This may present a problem when, for example, ceramic parts are to be heated under a nitrogen atmosphere. This is a problem particularly with non-oxide ceramics and metals. For these reasons, attempts have been made to develop binders which provide improved strength without sacrificing burnout and rheological properties.

As described in Japanese Patent No. HE1-27018, in an attempt to develop a binder which provides for improved properties over cellulosic binders, a copolymer of alkyl methacrylate or alkyl acrylate esters, alkoxyalkyl methacrylate or alkoxyacrylate esters, vinyl acetate and monomers containing one or more carboxyl groups, is used as a binder for molding ceramic parts. However, the presence of at least 10 percent vinyl acetate is required. It may be desirable to avoid the use of vinyl acetate in a polymeric binder.

The present invention seeks to overcome the inadequacies in cellulosic polymeric binders for formation of parts by extrusion of inorganic powder materials.

It has been surprisingly found that the presence of vinyl acetate is not required in the polymeric binder of the present invention, and, contrary to the disclosure of the above-cited Japanese patent, the elimination of vinyl acetate from the binder composition provides for improved rupture strength in a ceramic part. The use of the polymeric binder of the present invention provides an increase in modulus of rupture by 50 percent, typically exceeding 100 percent, over a comparable part made using a polymeric binder containing vinyl acetate. Depending upon the inorganic material and the composition of the binder, the increase in the modulus of rupture may be as much as 200 percent. Modulus of rupture of ceramic parts made with the binder of the present invention was compared to that of ceramic parts made with the comparative binder by means of a flexural test according to ASTM C-1161. The test was modified in that the part used for testing was a cylindrical part .31 inch (.79 cm) in diameter and 4.5 inches (11.4 cm) long. Testing of ceramic parts made using the method of the present invention produces the unexpected result of a rupture strength more than three times as high for a ceramic part made using a binder of the present invention as for a ceramic part made using a binder containing vinyl acetate.

With the use of the selected polymeric binders of the present invention, the extruded parts can be dried at room temperature or at elevated temperatures. The binders of the present invention can be readily mixed with ceramic or metal powders to form a homogeneous paste. These binders provide the necessary rheological and mechanical properties for extrusion of a variety of shapes and materials, such as, for example, ceramic tapes, tubes or rods; stainless steel tapes; metal wires; ribbons and complex structures including honeycomb monoliths for use as catalyst substrates. Ceramic and metal products made using such a binder have reduced cracking and rigidity as compared to ceramic and metal products made using conventional extrusion binders, and improved mixing and green strength.

The present invention is a method for forming extruded parts from an inorganic material which comprises using as a binder for the inorganic material one or more vinyl acetate-free polymers comprising, as polymerized units, at least 1 percent of one or more monoethylenically unsaturated acids; and from 1 percent to 99 percent of one or more acid-free monomers. The acid-free monomer(s) may, for example, comprise one or more monomer selected from the group consisting of: alkyl acrylates, alkyl methacrylates, aryl acrylates, and aryl methacrylates.

The present invention provides extruded parts containing an acrylic polymer at a level of from 1 percent to 30 percent by weight, based on the weight of inorganic powder, wherein the acrylic polymer is formed from, as polymerized units, at least 1 percent by weight of one or more monoethylenically unsaturated acids.

The acrylic polymer of the present invention is formed from at least 1 percent by weight of one or more monoethylenically unsaturated acids. The one or more monoethylenically unsaturated acids in the acrylic polymer may be present at from 1 percent to 99 percent by weight, but preferably from 5 percent to 50 percent and most preferably from 10 percent to 30 percent.

The polymers suitable for the present invention are polymers comprising, as polymerized units, at least 1 percent by weight of one or more monoethylenically unsaturated acids. Monoethylenically unsaturated acids can be mono-acids, di-acids or polyacids and the acids include, but are not limited to, carboxylic acids, sulphonic acids, phosphonic acids, or mixtures thereof. Suitable monoethylenically unsaturated acids are, for example, acrylic acid, methacrylic acid, crotonic acid, and vinylacetic acid. Suitable monoethylenically unsaturated dicarboxylic acids are, for example, maleic acid, itaconic acid, mesaconic acid, fumaric acid, citraconic acid, 2-acrylamido-2-methylpropanesulfonic acid, allylsulfonic acid, allylphosphonic acid, allyloxybenzenesulfonic acid, 2-hydroxy-3-(2-propenyloxy) propanesulfonic acid, isopropenylphosphonic acid, vinylphosphonic acid, styrenesulfonic acid, and vinylsulfonic acid. Most preferably, the one or more monoethylenically unsaturated acids are acrylic acid or methacrylic acid. The one or more monoethylenically unsaturated acids represent at least 1 percent by weight of the total monomer weight, preferably from 5 percent to 50 percent and most preferably from 10 percent to 30 percent.

In addition, the polymers of the present invention may contain, as polymerized units, one or more monoethylenically unsaturated acid-free monomers. Suitable monoethylenically unsaturated acid-free monomers include C₁-C₈ alkyl esters of acrylic or methacrylic acids such as methyl acrylate, ethyl acrylate, butyl acrylate, methyl methacrylate, ethyl methacrylate, butyl methacrylate and isobutyl methacrylate; hydroxyalkyl esters of acrylic or methacrylic acids such as hydroxyethyl acrylate, hydroxypropyl acrylate, hydroxyethyl methacrylate, and hydroxypropyl methacrylate; aryl acrylates; and aryl methacrylates. Other monoethylenically unsaturated acid-free monomers are acrylamides and alkylsubstituted acrylamides including acrylamide, methacrylamide, N-tertiarybutylacrylamide, N-methylacrylamide, and N,N-dimethylacrylamide. Other examples of monoethylenically unsaturated acid-free monomers include acrylonitrile, methacrylonitrile, allyl alcohol, phosphoethyl methacrylate, 2-vinylpyridene, 4-vinylpyridene, N-vinylpyrrolidone, N-vinylformamide, N-vinylimidazole, vinyl acetate, and styrene. The one or more monoethylenically unsaturated acid-free monomers preferably represent less than about 80 percent by weight of the total monomer weight, and more preferably less than about 60 percent by weight of the total monomer weight.

The acrylic polymer of the present invention is a random copolymer and may be a dipolymer, terpolymer, tetrapolymer, or may be made from the polymerization of any reasonable number of acrylic monomers. The polymer may optionally contain dicarboxylic acid monomers. The polymer may formed by any conventional polymerization means, such as, for example, emulsion polymerization, solution polymerization, bulk polymerization, batch polymerization and suspension polymerization. Aspects of polymerization such as the selection and levels of initiators, processing conditions (temperature, pressure, feed rates, stirring), pH and the like are known to persons with ordinary skill in the art.

To obtain a polymer which contains, as polymerized units, from 2 percent to 50 percent of one or more monoethylenically unsaturated acids, emulsion polymerization is the preferred method. Optional additives may be present in the emulsion, such as, for example, lubricants or sintering aids.

If the polymer is formed by emulsion polymerization, the resulting polymer emulsion is added to a ceramic or metal powder to form a paste. In an aqueous emulsion, the amount of water may comprise about 30 percent by weight of the emulsion, and other optional additives a total weight of from 1 percent to 5 percent. The amount of polymer in the emulsion added to the paste may range from 1 percent to 30 percent by weight based on the total weight of the ceramic or metal powder in the paste. The amount of ceramic or metal powder in the paste may range from 30 percent to 90 percent by weight, based on the total weight of all components in the paste.

If the polymer is formed by some other polymerization method, such as, for example, suspension polymerization or solution polymerization, the polymer may be isolated from any liquid present by conventional methods, such as freeze drying or spray drying, or may be used in the presence of the liquid. If a dry polymer is used, it is added to the ceramic or metal powder with liquid at from 1 percent to 50 percent by weight, based on the weight of ceramic or metal. Optional additives may constitute a total of from 1 percent to 5 percent of the total weight of all components in the paste.

The formation of a suitable paste for extrusion is partly determined by the glass transition temperature of the binder (Tg). The glass transition temperature is the temperature at or above which a polymer will soften and become rubbery or liquid-like. Regardless of the polymerization method used, the resulting polymer should have a Tg in the range from -70° to 170°C, preferably from -30° to 70°C, and most preferably from -20° to 50°C. A polymer with a Tg above 50°C may be readily plasticized by the addition of water or other plasticizers such as dimethyl phthalate or dibutyl phthalate until the desired consistency is obtained.

The binder of the present invention may be used with ceramics, including oxide, nitride, boride and carbide ceramics, and superconductors, and with metals including alkaline earth metals and transition metals, and oxides thereof. The binder may also be used with other minerals and combinations thereof, such as, for example, clay and zeolites.

Examples of ceramic materials useful with the binder of the present invention include alumina, aluminum nitride, silica, silicon carbide, silicon nitride, sialon, zirconia, zirconium nitride, zirconium carbide, zirconium boride, titania, titanium nitride, titanium carbide, barium titanate, titanium boride, boron nitride, boron carbide, tungsten carbide, tungsten boride, tin oxide, ruthenium oxide, yttrium oxide, magnesium oxide, calcium oxide and mixtures thereof. The ceramic material may be in the form of, for example, a powder or whiskers.

Examples of metals useful with the binder of the present invention include iron, nickel, copper, tungsten, titanium, and other transition metals. Examples of mixtures of two or more metals and of metal oxides include stainless steel, bronze, and metal superconductors.

The binder may also be used with elemental materials that may be extruded into parts such as, for example, elemental carbon and silicon.

If desired, it is possible to incorporate polyethylenically unsaturated compounds into the polymer. Polyethylenically unsaturated compounds function as crosslinking agents and will result in the formation of higher molecular weight polymers.

For some applications, it may be preferred to use a blend of at least two of the polymeric binders of the present invention. For example, one polymeric binder may primarily improve strength, and another may primarily improve rheological properties. A blend of two polymeric binders may then be used in order to optimize both parameters.

It is preferred that polymers for use in the method of the present invention have a weight average molecular weight ("Mw") greater than about 1,000. More preferably, the polymers will have a molecular weight of from about 1,500 to about 2 million, and most preferably from about 20,000 to about 1 million.

To use the polymeric binder of the present invention, it is preferred that the pH of the ceramic or metal paste be at least 8.5. If the pH is below 8.5, the green strength and plasticity may not be acceptable for some applications. If the pH of the ceramic paste when formed is below 8.5, the pH may be increased by the addition of organic or inorganic bases. For example, useful organic bases include 2-amino-2-methyl-1-propanol and other amines. Inorganic bases useful in obtaining the desired pH level for the present invention include ammonium hydroxide, sodium hydroxide, calcium hydroxide, and barium hydroxide, and other hydroxides of alkaline metals.

The following examples are provided as an illustration of the use of the present invention.

### Example 1 - Formation of Extruded Alumina Part with Acid-Containing Binder

To 100.0 grams (g) of alumina powder were added 3.5 grams of AMP-95_ (95% solution of 2-amino-2-methyl-1-propanol from Angus Chemical Company) while mixing. After five minutes, a mixture of 19.6 grams of acrylic emulsion binder A (86% ethyl acrylate, 10% methyl methacrylate and 4% acrylic acid) and 4.0 grams of acrylic emulsion binder B (50% ethyl acrylate, 40% methacrylic acid, and 10% polyethoxylated octadecanol methacrylate) was added, and mixing was continued for another five minutes to form a homogeneous distribution of the binder, liquid, and powder. 7.4 g water was added, and mixing was continued to form a uniform particulate paste. The resulting particulate paste was rolled three times, using a three-roll mill, before extrusion. The rolled flake-like paste was processed in a food processor before being fed into a ram extruder. The paste was extruded at room temperature through a slit-like die using a ram-extruder (2" diameter barrel with 12" stroke, Loomis 232-20L). The extrudates were lain flat on a board and allowed to dry at room temperature. After overnight drying at room temperature, drying was completed in an oven at 80°C for 2 hours. The present example illustrates the use in an extrusion process of two binders as provided by the present invention.

### Example 2 - Formation of Extruded Part with Acid-Containing Binder and Polyurethane Thickener

A pre-mixed blend of 6.6 g of binder A and 6.6 g of binder B, as described in Example 1, were added to 100 grams of alumina powder. The addition was with continuous hand mixing for 5 minutes in a 250 ml plastic beaker using an 8 inch stainless spatula. A solution of 4.4 g of a polyurethane thickener (20 % solids) in 11 grams of water was added. Mixing was continued for another 5 more minutes. The resulting paste-like material was extruded in a piston ram-type extruder with a 3/8" round die diameter. The present example illustrates the use in an extrusion process of two polymeric binders as provided by the present invention, with a polyurethane thickener.

### Example 3 - Formation of Extruded Part with Acid-Containing Binder and Polyurethane Thickener

To 150 g carbonyl iron powder were added 1.5 g oleic acid. The addition was with continuous hand mixing in a 250 ml plastic beaker using an 8 inch stainless spatula. After 5 minutes of mixing, a pre-mixed blend of 11.0 grams of binder A and 5.5 grams of a polyurethane thickener (20 % solids) were added. The mixture was then milled using a micromill for one minute. 2.2 g ammonium carbonate was added to the mixture, followed by an additional 30 seconds of mixing. The resulting material was extruded in a piston ram-type extruder with a slit-like die with 0.8 mm opening (thickness). The present example illustrates the use of one polymeric binder as provided by the present invention, along with a polyurethane thickener.

### Example 4 - Formation of Extruded Part with Acid-Containing Binder for Strength Testing

To 100.0 g of Alcoa A-14 alumina powder (Alcoa Chemical Co.) were added 0.5 grams of PEG-400 2.5 and mixed, then 2.5 grams of AMP-95_ were added with mixing. After five minutes, a mixture of 4.9 g acrylic emulsion binder A and 4.4 g acrylic emulsion binder B were added, and mixing was continued for another five minutes to form a homogeneous distribution of the binder, liquid and powder. 16.3 g water were added, and mixing was continued to form a uniform particulate paste. The pH of the paste was 10.8. The resulting particulate paste was ruled on a three-roll mill three times before extrusion. The rolled flake-like paste was processed in a food processor, then fed into a ram extruder. The paste was extruded at room temperature through a round die using a ram-extruder (2" diameter barrel with 12" stroke, Loomis 232-20L). The test method was modified ASTM C1161-90 as described supra, with a 0.79 cm diameter x 11.4 cm test piece. The average MOR of the extrudate was 12.210.8 MPa.

### Comparative Example A (For comparison with Example 4)

To 100.0 grams of Alcoa A-14 alumina powder (Alcoa Chemical Co.) were added 0.5 grams of PEG400 2.5 followed by mixing. 2.5 g AMP-95_{_} (95% solution of 2-amino-2-methyl-1-propanol from Angus Chemical Company) were added with continuous mixing. After five minutes, a 7.3 g of an emulsion binder, which was 55% polymer (47% vinyl acetate, 27% butylacrylate, 22% 2ethylhexylacrylate, and 5% acrylic acid), was added. Mixing was continued for another five minutes to form a homogeneous distribution of the binder, liquid and powder. 15.7 g water were added, and mixing was continued to form a uniform particulate paste. The pH of the paste was 10.9. The resulting particulate paste was milled on a three-roll mill three times before extrusion. The rolled flake-like paste was broken down into small parts in a food processor, then fed into a ram extruder. The paste was extruded at room temperature through a round die using a ram-extruder (2" diameter barrel with 12" stroke, Loomis 232-20L). The extrudates were lain flat on a board and allowed to dry at room temperature. After overnight drying at room temperature, the extrudates were oven dried at 80°C for two hours. A universal test apparatus (Instron 1122) was used to measure the modulus of rupture (MOR) of the extrudated rods. The average MOR of the extrudate was 3.4±0.1 MPa.

The MOR is well known in the art as a basis for comparing the mechanical properties of ceramic materials and as an indicator of quality and consistency. Generally, the better the binder, the higher the MOR at a comparable binder usage level. The results of MOR measurements in Example 4 and Comparative Example A indicate a MOR for a part made using the binder of the present invention, which is higher by more than 300 percent than that of a ceramic part made with a binder containing vinyl acetate.

## Claims

1. A method for forming extruded parts from an inorganic material which comprises using as a binder for the inorganic material one or more vinyl acetate-free polymers comprising, as polymerized units:
at least 1 percent of one or more monoethylenically unsaturated acids; and from 99 percent to 1 percent of one or more acid-free monomers.

2. A method as claimed in claim 1 further comprising the step of extruding a mixture of:
a) the inorganic material;
b) the binder;
c) from 0 percent to 30 percent by weight of water; and
d) from 0 percent to 20 percent by weight of one or more processing aids.

3. A method as claimed in claim 1 or claim 2 wherein the method comprises using as a binder a mixture of at least two polymers comprising, as polymerized units, at least 1 percent of one or more monoethylenically unsaturated acids; and from 99 percent to 1 percent of one or more acid-free monomers.

4. A method as claimed in any preceding claim further comprising the addition of one or more compounds selected from the group of organic and inorganic bases.

5. A method as claimed in any preceding claim wherein the one or more monoethylenically unsaturated acids are selected from the group consisting of: monoethylenically unsaturated carboxylic acids, sulphonic acids, phosphonic acids, and combinations thereof.

6. A method as claimed in any preceding claim wherein the one or more monoethylenically unsaturated acids are selected from the group consisting of: acrylic acid, methacrylic acid, crotonic acid, vinylacetic acid, maleic acid, itaconic acid, mesaconic acid, fumaric acid, citraconic acid, 2-acrylamido-2-methylpropanesulfonic acid, allylsulfonic acid, allylphosphonic acid, allyloxybenzenesulfonic acid, 2-hydroxy-3-(2-propenyloxy) propanesulfonic acid, isopropenylphosphonic acid, vinylphosphonic acid, styrenesulfonic acid, and vinylsulfonic acid.

7. A method as claimed in any preceding claim wherein the one or more acid-free monomers are selected from the group consisting of: methyl acrylate, ethyl acrylate, butyl acrylate, methyl methacrylate, ethyl methacrylate, butyl methacrylate and isobutyl methacrylate; hydroxyalkyl esters of acrylic or methacrylic acids such as hydroxyethyl acrylate, hydroxypropyl acrylate, hydroxyethyl methacrylate, and hydroxypropyl methacrylate.

8. A method as claimed in any preceding claim wherein the one or more polymeric binders comprise, as polymerized units, one or more monomers selected from the group consisting of: acrylonitrile, methacrylonitrile, allyl alcohol, phosphoethyl methacrylate, 2-vinylpyridene, 4-vinylpyridene, N-vinylpyrrolidone, N-vinylformamide, N-vinylimidazole, vinyl acetate, styrene, acrylamide, methacrylamide, N-tertiarybutylacrylamide, N-methylacrylamide, and N,N-dimethylacrylamide.

9. A method as claimed in any preceding claim wherein the inorganic material comprises one or more ceramic materials selected from the group consisting of: alumina, aluminum nitride, silica, silicon, silicon carbide, silicon nitride, sialon, zirconia, zirconium nitride, zirconium carbide, zirconium boride, titania, titanium nitride, titanium carbide, barium titanate, titanium boride, boron nitride, boron carbide, tungsten carbide, tungsten boride, tin oxide, ruthenium oxide, yttrium oxide, magnesium oxide, and calcium oxide.

10. A method as claimed in any of claims 1 to 8 wherein the inorganic material comprises one or more materials selected from: carbon, iron, nickel, copper, tungsten, titanium; metal oxides; ceramic superconductors, and metal superconductors.

11. A method as claimed in any preceding claim wherein the one or more monoethylenically unsaturated acids are present at a level of from 1 percent to 50 percent by weight, based on the weight of the polymer.

12. A method as claimed in any of claims 1 to 8 wherein the inorganic material comprises one or more material selected from ceramic materials and metals.

13. A method for forming extruded parts from an inorganic material which comprises using as a binder for the inorganic material one or more vinyl acetate-free polymers comprising, as polymerized units:
at least 1 percent of one or more monoethylenically unsaturated acids;
and from 99 percent to 1 percent of one or more acid-free monomers.
wherein the modulus of rupture of said extruded parts is improved by more than 50 percent as compared to extruded parts formed using a binder containing vinyl acetate.

14. The method according to claim 13 wherein said modulus of rupture is improved by more than 100 percent, preferably by more than 200 percent.
